# EUROPEAN PATENT SPECIFICATION

(11) **EP 1 599 083 B1**
(45) Date of publication and mention of the grant of the patent: **19.11.2008**
(21) Application number: 04715596.5
(22) Date of filing: 27.02.2004
(51) Int. Cl.: A01G 9/10

(54) **ASSEMBLY OF A GRIP AND SET DOWN APPARATUS FOR POT PLANTS AND A SUPPORTING APPARATUS FOR SUPPORTING THEREOF**
ANORDNUNG EINER GRIFFS UND ABSETZVORRICHTUNG FÜR TOPFPFLANZEN UND EINES SYSTEMS ZUR STÜTZUNG SOLCHE VORRICHTUNG
ASSEMBLAGE D'UN DISPOSITIF DE PREHENSION ET DE POSE DE PLANTES EN POTS ET D'UN SYSTEME DE SUPPORT POUR LEDIT DISPOSITIF

(30) Priority: 05.03.2003 NL 1022847
(43) Date of publication of application: 30.11.2005
(73) Proprietor: Visser 's-Gravendeel Holding B.V., 3295 KH 's-Gravendeel (NL)
(72) Inventor: HOUTEPEN, Adrianus, Cornelis, Petrus, NL-4841 JE Prinsenbeek (NL)
(74) Representative: Tabeling, Marcella M.J.
(86) International application number: PCT/NL2004/000149
(87) International publication number: WO 2004/077932

(56) References cited:
- EP-A- 0 286 624
- EP-A- 0 395 166
- WO-A-94/07789
- FR-A- 2 778 637
- NL-A- 8 803 104
- NL-A- 9 402 104

## Description

The invention relates to an assembly of a grip and set down apparatus for pot plants and a supporting apparatus for supporting thereof, wherein the grip and set down apparatus for pot plants comprises a transverse element which can be mounted on a vehicle and carriers which extend from the transverse element in substantially horizontal direction and which are adapted for picking up and setting down pot plants. A grip and set down apparatus for pot plants forms the or subject of the Netherlands patent application 1 019 537 or EP-A-0 395 166.

This apparatus comprises a series of carriers between which the pot plants are situated during transport of the pot plants. During the actual transport, these carriers are situated a considerable distance from the ground over which the vehicle is travelling, so that a possible bending of the carriers does not cause any problems. During the actual pick-up or setting-down operation the carriers are situated a short distance from the ground over which the vehicle is travelling and onto which the pot plants must be set down or from which they must be picked up, so that possible sagging of the carriers can result in problems in the form of the pot plants being set down in inclining position, whereby they can fall over, or not being able to pick up the pot plants in the correct manner.

The object of the present invention is to provide an attachment with which these above stated problems are prevented.

This object is achieved by an assembly comprising a supporting apparatus which is provided with a frame, wheels mounted on the frame and support elements for supporting at least some of the number of horizontal carriers.

The above stated problems are avoided by supporting at least some of the horizontal carriers

According to a first preferred embodiment, which is suitable for a grip and set down apparatus wherein at least the distal ends of the horizontal carriers are movable in vertical direction, the supporting apparatus is adapted to support the horizontal carriers in the lowest position of the distal ends of the horizontal carriers.

The carriers will sag most at their distal end as a result of the weight of the pot plants. The need for support is therefore greatest here. The above stated measure takes this into account.

Another preferred embodiment provides the measure that the wheels are swivel wheels, wherein the supporting apparatus is provided with at least two engaging support elements which are adapted to transfer horizontal forces between the grip and set down apparatus and the supporting apparatus.

In practice such a grip and set down apparatus is usually fixed to a vehicle in the form of a forklift truck. The normal forks have herein been removed from the forklift truck and replaced by the grip and set down apparatus. During the actual pick-up and setting-down, the grip and set down apparatus performs a movement. It is important here that the supporting apparatus can follow this movement. These movements of course take place substantially in the lengthwise direction, in the main direction of the carriers. During manoeuvring however, movements also take place in the direction extending transversely thereof, as well as rotation movements about a vertical axis. This is taken into account by providing swivel wheels.

During performing of these movements it is attractive when there is a specific coupling between the grip and set down apparatus and the supporting apparatus. Yet another preferred embodiment provides for this purpose the measure that the transverse element is movable in vertical direction and that the engaging support elements are adapted to bring about a coupling between engaging support elements and a coupling element fixed to the transverse element when the transverse element is moved downward and to break the coupling when the transverse element is moved upward.

The measure that the engaging support elements are provided on their upper side with a conical cup results in an attractive construction of this embodiment.

During effecting of this coupling the forklift truck must be manoeuvred such that the coupling elements are situated precisely above the engaging elements before the transverse element can be moved in vertical direction. In order to facilitate this manoeuvring, it is important that the engaging support elements are placed such that they are readily visible to the driver of the vehicle.

In the use of the support element, for instance for setting down pot plants, the driver of the vehicle leaves the support element behind at the position where the grip and set down apparatus set down the last pot plant. When a subsequent load of pot plants is set down, the support element is thus situated at a position which determines a position of the grip and set down apparatus such that the subsequent load of pot plants is placed adjacently of the first load.

Similar considerations apply for picking-up of pot plants.

The invention therefore relates to two methods as set forth in claims 7 and 8.

The present invention will be elucidated hereinbelow with reference to the annexed figures, in which:
Figure 1 is a schematic side view of the supporting apparatus according to the invention; and

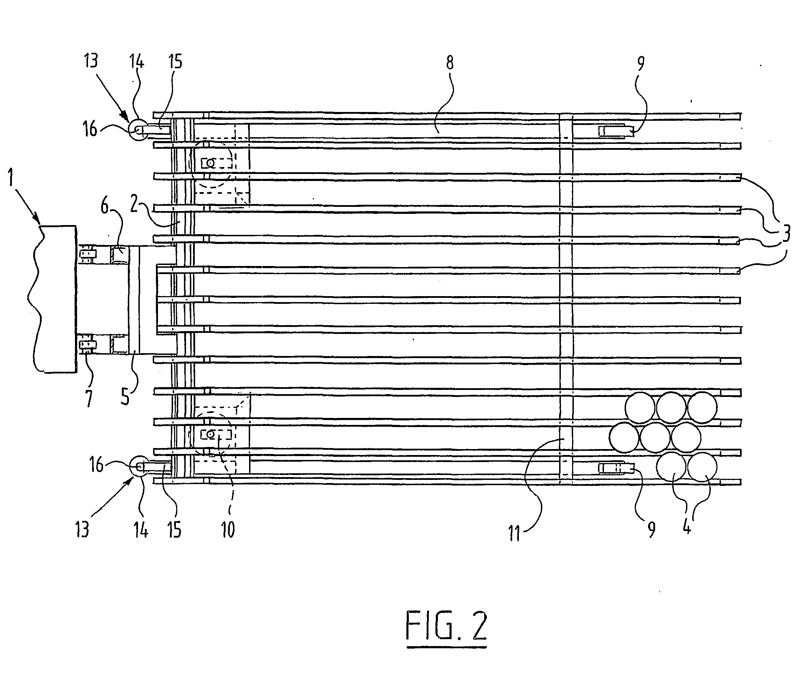

Figure 2 is a schematic top view of the apparatus according to the invention.

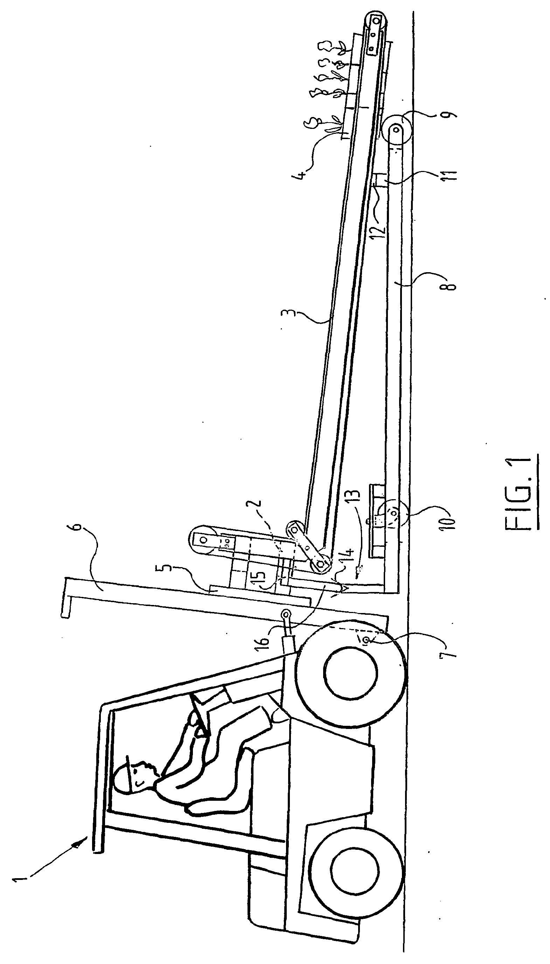

Figure 1 shows a forklift truck 1, the forks of which are replaced with a grip and set down apparatus as according to Netherlands patent application 1 019 537. This apparatus comprises a transverse element 2 to which carriers 3 are fixed. These carriers 3 are provided with conveyor belts or chains for transporting along the carriers and setting down and picking up flowerpots 4. Transverse element 2 is fixed to carriage 5 of the forklift truck which is movable in vertical direction along tower 6. Tower 6 is further tiltable about a rotation point 7.

The supporting apparatus according to the present invention is formed by a frame 8 which is for instance manufactured from aluminium profiles. The frame is provided with two front wheels 9 and two rear wheels 10. The rear wheels 10 in any case are embodied as swivel wheels. The front wheels can be embodied as fixed wheels but also as swivel wheels. A number of supports 12 are arranged on the frame, in particular on a front cross beam 11 thereof, in order to support carriers 3. These supports are adapted to support the carriers as far to the front as possible in order to prevent sagging of the carriers. It will be apparent that the carriers cannot be fully supported at their distal end since insufficient space will then be available under the carriers during setting down or picking up of the pot plants. The carriers must after all be situated here a short distance from the ground. At the rear two engaging support elements 13 are arranged. They are provided on their upper side with a cup-shaped end 14.

Transverse element 2 of the grip and set down apparatus is connected by means of two brackets 15 to two coupling elements 16, which are adapted for coupling to engaging support element 13.

The method for performing with the supporting apparatus according to the present invention will now be elucidated. When a load of pot plants 4 is picked up, the situation is assumed where the support element is left in the correct position for picking up a series of pot plants. The driver of the forklift truck herein drives the grip and set down apparatus 3 to a position above the supporting apparatus. He will then manoeuvre carefully in order to place coupling elements 16 above engaging support elements 14 and then lower transverse element 2 until coupling element 16 is in engagement with engaging support element 14. He will subsequently tilt the carriers 3 until the underside of the carriers is in contact with supports 12.

The pot plants 4 can then be easily picked up by driving the forklift truck slowly forward and operating the transporting device for pot plants arranged in carriers 3. For the operation hereof reference is made to Netherlands patent application 1 019 537.

When the spaces between carriers 3 have been completely filled, carriers 3 are tilted to the horizontal position and transverse element 2 is moved upward. The forklift truck driver can drive the thus released grip and set down apparatus to the position where he wants to place the pot plants.

Having arrived there, he will, in the same manner as when picking up the pot plants, effect a coupling between the supporting apparatus according to the invention present at the unloading location, and then gradually unload the grip and set down apparatus while slowly reversing the forklift truck. Here too is assumed the situation where the supporting apparatus has been left in the correct position at the unloading location.

Once the "fork" has been fully unloaded, it is uncoupled again from the supporting apparatus, which once again remains at the correct position, whereafter the truck returns to the loading position. Because the support element has already been left at the correct position during the previous loading operations, it is situated at the correct position again for the following loading operation.

The apparatus thus has two aspects, i.e. supporting of the carrier in order to prevent sagging, and determining of the position of the grip and set down apparatus.

## Claims

1. Assembly of a grip and set down apparatus for pot plants and a supporting apparatus for supporting thereof, wherein the grip and set down apparatus comprises a transverse element (2) which can be mounted on a vehicle and a number of carriers (3) which extend from the transverse element (2) in substantially horizontal direction and which are adapted for picking up and setting down pot plants, and wherein the supporting apparatus comprises a frame (8), wheels (9,10) mounted on the frame (8) and support elements (12) for supporting at least some of the number of horizontal carriers (3).

2. Assembly as claimed in claim 1, **characterized in that** at least the distal ends of the horizontal carriers (3) are movable in vertical direction, and that the supporting apparatus is adapted to support the horizontal carriers (3) in the lowest position of the distal ends of the horizontal carriers (3).

3. Assembly as claimed in claim 1 or 2, **characterized in that** the wheels (9,10) are swivel wheels (10) and that the supporting apparatus is provided with at least two engaging support elements (13) which are adapted to transfer horizontal forces between the grip and set down apparatus and the supporting apparatus.

4. Assembly as claimed in claim 3, **characterized in that** the transverse element (2) is movable in vertical direction and that the engaging support elements (13) are adapted to bring about a coupling between the engaging support elements (13) and a coupling element (16) fixed to the transverse element (2) of the grip and set down apparatus when the transverse element (2) is moved downward and to break the coupling when the transverse element (2) is moved upward.

5. Assembly as claimed in claim 4, **characterized in that** the engaging support elements (13) are provided on their upper side with a conical cup (14).

6. Assembly as claimed in claim 4 or 5, **characterized in that** the engaging support elements (13) are placed such that they are readily visible to the driver of the vehicle.

7. Method for picking up and setting down pot plants (4) with an assembly as claimed in any of the foregoing claims.

8. Method for picking up pot plants (4) with a pot plant grip and set down apparatus as claimed in any of the claims 4 to 6 mounted to a vehicle, comprising the following steps of:
- driving the vehicle with empty carriers (3) to the supporting apparatus as claimed in any of the claims 4-6;
- driving the vehicle into a position with the coupling element (16) above the engaging support elements (13) ;
- effecting a coupling between the coupling element (16) and the engaging support elements (13) by lowering the transverse element (2);
- picking up the pot plants with the carriers (3);
- lifting the carriers (3) and the transverse element (2); and
- driving the vehicle away with loaded carriers (3) after the coupling element (16) has been uncoupled from the engaging support elements (13).

9. Method for setting down pot plants (4) with a pot plant grip and set down apparatus as claimed in any of the claims 4 to 6 mounted to a vehicle, comprising the following steps of:
- driving the vehicle with loaded carriers (3) to the supporting apparatus as claimed in any of the claims 4-6;
- driving the vehicle into a position with the coupling element (16) above the engaging support elements (13);
- effecting a coupling between the coupling element (16) and the engaging support elements (13) by lowering the transverse element (2);
- setting down the pot plants (4) with the carriers (3);
- lifting the carriers (3) and the transverse element (2); and
- driving the vehicle away with empty carriers (3) after the coupling element (16) have been uncoupled from the engaging support elements (13).

## Patentansprüche

1. Anordnung einer Greif- und Absetzvorrichtung für Topfpflanzen und eine Stützvorrichtung für dessen Abstützung, wobei die Greif- und Absetzvorrichtung ein Querelement (2) umfasst, das an einem Fahrzeug montiert werden kann, und eine Anzahl von Trägern (3), die sich von dem Querelement (2) in einer im Wesentlichen horizontalen Richtung erstrecken und die geeignet sind, um Topfpflanzen aufzunehmen und abzusetzen, und wobei die Stützvorrichtung einen Rahmen (8), Räder (9,10), die an dem Rahmen (8) angeordnet sind, und Stützelemente (12) umfasst, um zumindest einige der Anzahl horizontaler Träger (3) zu stützen.

2. Anordnung nach Anspruch 1, **dadurch gekennzeichnet, dass** zumindest die distalen Enden der horizontalen Träger (3) in vertikaler Richtung beweglich sind und dass die Stützvorrichtung geeignet ist, um die horizontalen Träger (3) in der niedrigsten Stellung der distalen Enden der horizontalen Träger (3) zu stützen.

3. Anordnung nach Anspruch 1 oder 2, **dadurch gekennzeichnet, dass** die Räder (9,10) Schwenkräder (10) sind und dass die Stützvorrichtung mit zumindest zwei eingreifenden Stützelementen (13) ausgestattet ist, die geeignet sind, um horizontale Kräfte zwischen der Greif- und Absetzvorrichtung und der Stützvorrichtung zu übertragen.

4. Anordnung nach Anspruch 3, **dadurch gekennzeichnet, dass** das Querelement (2) in vertikaler Richtung beweglich ist und dass die eingreifenden Stützelemente (13) geeignet sind, eine Kopplung zwischen den eingreifenden Stützelementen (13) und einem Kopplungselement (16) zu bewirken, das an dem Querelement (2) der Greif- und Absetzvorrichtung befestigt ist, wenn das Querelement (2) abwärts bewegt wird, und die Kopplung zu unterbrechen, wenn das Querelement (2) nach oben bewegt wird.

5. Anordnung nach Anspruch 4, **dadurch gekennzeichnet, dass** die eingreifenden Stützelemente (13) auf ihrer oberen Seite mit einem kegelförmigen Außenring (14) versehen sind.

6. Anordnung nach Anspruch 4 oder 5, **dadurch gekennzeichnet, dass** die eingreifenden Stützelemente (13) derart angeordnet sind, dass sie für den Fahrer des Fahrzeugs leicht zu sehen sind.

7. Verfahren zum Hochheben und Absetzen von Topfpflanzen (4) mit einer Anordnung nach irgendeinem der vorstehenden Ansprüche.

8. Verfahren zum Hochheben von Topfpflanzen mit einer Topfpflanzengreif- und
- absetzvorrichtuhg nach irgendeinem der Ansprüche 4 bis 6, die an einem Fahrzeug angeordnet ist, wobei die folgenden Schritte umfasst sind:
- Fahren des Fahrzeugs mit leeren Trägern (3) zu der Stützvorrichtung nach einem der Ansprüche 4 - 6;
- Fahren des Fahrzeugs in eine Position, in der sich das Kopplungselement (16) über den eingreifenden Stützelementen (13) befindet;
- Herbeiführen einer Kopplung zwischen dem Kopplungselement (16) und den eingreifenden Stützelementen (13), indem das Querelement (2) herabgelassen wird;
- Aufnehmen der Topfpflanzen mit den Trägern (3);
- Hochheben der Träger (3) und des Querelements (2); und
- Wegfahren des Fahrzeugs mit den beladenen Trägern (3), nachdem das Kopplungselement (16) von den eingreifenden Stützelementen (13) abgekoppelt wurde.

9. Verfahren zum Absetzen von Topfpflanzen (4) mit einer Topfpflanzengreif- und -absetzvorrichtung nach einem der Ansprüche 4 - 6, die auf einem Fahrzeug angeordnet ist, wobei die folgenden Schritte umfasst sind:
- Fahren des Fahrzeugs mit beladenen Trägern (3) zu der Stützvorrichtung nach einem der Ansprüche 4 - 6;
- Fahren des Fahrzeugs in eine Position, bei der sich das Kopplungselement (16) über den eingreifenden Stützelementen (13) befindet;
- Hervorrufen einer Kopplung zwischen dem Kopplungselement (16) und den eingreifenden Stützelementen (13) durch Absenken des Querelements (2);
- Absetzen der Topfpflanzen (4) mit den Trägern;
- Hochheben der Träger (3) und des Querelements (2); und
- Wegfahren des Fahrzeugs mit leeren Trägern (3), nachdem das Kopplungselement (16) von den eingreifenden Stützelementen (13) abgekoppelt wurde.

## Revendications

1. Ensemble d'appareil de saisie et de dépôt pour plantes vertes et appareil de support destiné à le supporter, dans lequel l'appareil de saisie et de dépôt comprend un élément transversal (2) qui peut être monté sur un véhicule et un certain nombre de chariots (3) qui s'étendent depuis l'élément transversal (2) dans une direction sensiblement horizontale et qui sont adaptés pour saisir et déposer des plantes vertes, et dans lequel l'appareil de support comprend un cadre (8), des roues (9, 10) montées sur le cadre (8) et des éléments de support (12) destinés à supporter au moins certains parmi le nombre de chariots horizontaux (3).

2. Ensemble selon la revendication 1, **caractérisé en ce qu'**au moins les extrémités distales des chariots horizontaux (3) sont mobiles dans la direction verticale, et **en ce que** l'appareil de support est adapté pour supporter les chariots horizontaux (3) dans la partie la plus inférieure des extrémités distales des chariots horizontaux (3).

3. Ensemble selon la revendication 1 ou 2, **caractérisé en ce que** les roues (9, 10) sont des roues pivotantes (10) et **en ce que** l'appareil de support est pourvu d'au moins deux éléments de support de mise en prise (13) qui sont adaptés pour transférer les forces horizontales entre l'appareil de saisie et de dépôt et l'appareil de support.

4. Ensemble selon la revendication 3, **caractérisé en ce que** l'élément transversal (2) est mobile dans la direction verticale et **en ce que** les éléments de support de mise en prise (13) sont adaptés pour provoquer un accouplement entre les éléments de support de mise en prise (13) et un élément d'accouplement (16) fixé à l'élément transversal (2) de l'appareil de saisie et de dépôt lorsque l'élément transversal (2) est déplacé vers le bas et pour rompre l'accouplement lorsque l'élément transversal (2) est déplacé vers le haut.

5. Ensemble selon la revendication 4, **caractérisé en ce que** les éléments de support de mise en prise (13) sont pourvus sur leur côté supérieur d'une coupelle conique (14).

6. Ensemble selon la revendication 4 ou 5, **caractérisé en ce que** les éléments de support de mise en prise (13) sont placés de telle sorte qu'ils sont facilement visibles pour le conducteur du véhicule.

7. Procédé de ramassage et de dépôt de plantes vertes (4) comprenant un ensemble selon l'une quelconque des revendications précédentes.

8. Procédé de ramassage de plantes vertes (4) comprenant un appareil de saisie et de dépôt de plante verte selon l'une quelconque des revendications 4 à 6 monté sur un véhicule, comprenant les étapes suivantes :
- conduire le véhicule avec des chariots vides (3) vers l'appareil de support selon l'une quelconque des revendications 4 à 6 ;
- conduire le véhicule dans une position avec l'élément d'accouplement (16) au-dessus des éléments de support de mise en prise (13) ;
- effectuer un accouplement entre l'élément d'accouplement (16) et les éléments de support de mise en prise (13) en abaissant l'élément transversal (2) ;
- ramasser les plantes vertes avec les chariots (3) ;
- soulever les chariots (3) et l'élément transversal (2) ; et
- conduire le véhicule à distance des chariots chargés (3) après que l'élément d'accouplement (16) a été découplé des éléments de support de mise en prise (13).

9. Procédé de dépôt de plantes vertes (4) avec un appareil de saisie et de dépôt de plante verte selon l'une quelconque des revendications 4 à 6 monté sur un véhicule, comprenant les étapes suivantes :
- conduire le véhicule avec des chariots chargés (3) vers l'appareil de support selon l'une quelconque des revendications 4 à 6 ;
- conduire le véhicule dans une position avec l'élément d'accouplement (16) au-dessus des éléments de support de mise en prise (13) ;
- effectuer un accouplement entre l'élément d'accouplement (16) et les éléments de support de mise en prise (13) en abaissant l'élément transversal (2) ;
- déposer les plantes vertes (4) avec les chariots (3) ;
- soulever les chariots (3) et l'élément transversal (2) ; et
- conduire le véhicule à distance des chariots vides (3) après que l'élément d'accouplement (16) a été découplé des éléments de support de mise en prise (13).
